# DEMANDE DE BREVET EUROPEEN

(11) **EP 2 468 500 A1**
(43) Date de publication de la demande: **27.06.2012**
(21) Numéro de dépôt: 11358015.3
(22) Date de dépôt: 21.12.2011
(51) Int. Cl.: B32B 27/30, E04D 11/00

(54) **Complexe membraneux anti-vibratile et couvertures de toitures en faisant application**

(30) Priorité: 21.12.2010 FR 1004994
(71) Demandeur: Pisano, Jean-Philippe, 84140 Montfavet (FR)
(72) Inventeur: Pisano, Jean-Philippe, 84140 Montfavet (FR)
(74) Mandataire: Marek, Pierre

(57) **Abrégé**

L'invention concerne un complexe membraneux anti-vibratile remarquable en ce qu'il comprend une membrane externe (1) constituée d'une mince couche ou feuille de chlorure de polyvinyle PVC armée et/ou précontrainte disposée et fixée sur une couche sous-jacente d'isolation acoustique (2).

## Description

La présente invention concerne une membrane d'isolation acoustique pour le recouvrement de couvertures de toitures. Plus généralement, elle vise un complexe membraneux anti-vibratile de couverture. Elle s'applique également aux couvertures de toitures, en particulier aux panneaux composites de couvertures de toitures de bâtiments ou d'extensions de bâtiments ou d'édifices divers, par exemple aux couvertures de vérandas ou autres extensions de bâtiments, constituées de panneaux composites ou panneaux de type sandwich assemblés côte à côte avec ou sans profilés porteurs. Ces panneaux sont constitués d'un parement extérieur et d'un parement intérieur disposés de part et d'autre d'une âme ou noyau constituée d'une ou de plusieurs couches superposées de matériaux d'isolation thermique et/ou acoustique et/ou phonique.

Dans le domaine des toitures de vérandas, les panneaux composites de couvertures tels que les panneaux sandwiches à vocation d'isolation phonique et/ou acoustique, intègrent, dans leur composition, un contre-parement dit "acoustique" ou "séparateur" qui se trouve principalement situé, soit sous le parement métallique extérieur desdits panneaux exposé aux intempéries, soit au milieu du noyau isolant de ces panneaux ou soit sous le parement intérieur. Ces contre-parements sont généralement constitués par des masses lourdes, ou par des mousses de polyéthylène réticulé ou similaire, ou par des complexes de mousses de polyéthylène réticulé et de masses lourdes ou tout autre interposition souple (liège). Ces configurations ont un rendement d'isolation acoustique faible en raison du fait que la face extérieure de ces panneaux qui est généralement constituée par une plaque d'aluminium, rentre en résonance dès la moindre sollicitation par des ondes sonores ou lors du moindre choc résultant de l'impact des gouttes de pluie ou des grêlons. En effet, la rigidité et la légèreté sont deux facteurs négatifs pour la recherche d'une solution acoustique satisfaisante.

Dans le document WO-2009/034138, est décrite une membrane flexible, isolante et imperméable, pour le recouvrement d'une structure ou d'une couche de mousse isolante fixée à cette structure, cette membrane comprenant :
- une couche interne de mousse flexible, par exemple une mousse de matière thermo-plastique ou une mousse de matière thermodurcissable ;
- une couche intermédiaire de matière textile disposée au-dessus de ladite couche interne de mousse flexible, par exemple constituée par une matière textile tissée ou non tissée ; et,
- une couche externe imperméable, par exemple constituée par une peau imperméable recouvrant la couche intermédiaire.

Dans l'application au recouvrement de panneaux de couverture, la membrane composite décrite dans le document WO-2009/034138 a notamment pour inconvénient ou insuffisance, le fait qu'elle ne prévoit qu'une isolation thermique et qu'elle soit limitée dans sa composition. D'autre part, cette membrane est destinée aux toitures recouvertes d'une couche isolante.

Un but visé par la présente invention, est de remédier à ces inconvénients ou insuffisances.

Cet objectif est atteint grâce à un complexe membraneux anti-vibratile comprenant une membrane externe constituée d'une mince couche ou feuille de chlorure de polyvinyle (PVC) armée et/ou précontrainte, disposée et fixée sur une couche sous-jacente d'isolation acoustique.

Selon un premier mode d'exécution, la couche sous-jacente d'isolation acoustique est constituée par un voile non tissé de polyester.

Selon un deuxième mode d'exécution, la couche sous-jacente d'isolation acoustique est constituée par un monocouche de mousse PVC, ou de mousse de polyoléfine, ou de mousse de polyuréthane (PU).

Selon un troisième mode de mise en oeuvre, la couche sous-jacente d'isolation acoustique est constituée par un multicouche comprenant une couche de mousse PVC, ou de polyoléfine, ou de polyuréthane et un voile non tissé de polyester, adhésivé ou non, de préférence disposés, dans cet ordre, à partir de la membrane externe de PVC armée et/ou précontrainte.

Selon un quatrième mode de mise en oeuvre, la couche sous-jacente d'isolation acoustique est constituée par un multicouche comprenant : - une couche de masse lourde d'un élastomère de synthèse telles que, de l'Éthylène-Propylène-Diène-Monomère (EPDM), du Styrene-Butadiene Rubber (SBR), ou une couche d'un granulat de caoutchouc, ou de liège ; - une couche de mousse de PVC, ou de polyoléfine, ou de polyuréthane ; et, - un voile non tissé de polyester, adhésivé ou non, de préférence disposées dans cet ordre, à partir de la membrane externe de PVC précontrainte.

Selon une variante d'exécution du quatrième mode de mise en oeuvre, la couche de masse lourde (EPDM ou SBR, ou granulat de caoutchouc, ou liège) est disposée entre la feuille de mousse de PVC, ou la feuille de polyoléfine, ou la feuille de polyuréthane, et le voile non tissé de polyester, adhésivé ou non.

La couche ou feuille externe de PVC armée et précontrainte peut présenter une épaisseur comprise entre 0,2 et 5 mm ou plus, et de préférence, une épaisseur comprise entre 1 et 3 millimètres.

L'épaisseur du complexe membraneux anti-vibratile selon l'invention peut-être comprise entre 4 et 17 millimètres.

L'invention concerne également les couvertures de toitures comprenant des panneaux de type sandwich constitués, de manière connue en soi, d'un parement métallique extérieur et d'un parement métallique intérieur disposés de part et d'autre d'un noyau ou âme isolante, ces panneaux étant recouverts d'un complexe membraneux anti-vibratile comportant les caractéristiques susmentionnées.

Selon une autre caractéristique de l'invention, le parement métallique extérieur est souple et flexible, et est appliqué sur un noyau d'isolation thermique et/acoustique et/ou phonique, ledit parement métallique extérieur étant constitué d'une feuille d'aluminium présentant une épaisseur de l'ordre de 25 à 55 centièmes de millimètre.

Selon encore une autre caractéristique de l'invention, le noyau d'isolation thermique et/ou acoustique et/ou phonique comprend un multicouche constitué d'une mince couche d'un matériau souple, flexible et résilient ; et d'une couche épaisse d'un matériau d'isolation acoustique et/ou thermique et/ou phonique qui peut être constituée elle-même de deux couches superposées.

Suivant une variante du mode d'exécution précédent, la couche épaisse de matériau d'isolation acoustique et/ou thermique et/ou phonique est constituée de trois couches superposées dont la couche intermédiaire est munie de trous, ou d'un réseau de trous perpendiculaires au parement du panneau, dans lesquels sont logés des granules de masse lourde ou autres matériaux dotés de qualité d'isolation acoustique.

L'invention procure une amélioration sensible des performances d'isolation acoustique, par une meilleure absorption des bruits d'impacts et des bruits roses, en particulier dans l'application à la réalisation des couvertures de vérandas ou autres extensions de bâtiments.

Elle apporte également une amélioration notable des performances d'isolation acoustique des toitures de ce genre. Le complexe membraneux à effet masse/ressort ou ressort/masse, dissipe les ondes sonores avant l'entrée en résonance du parement métallique extérieur des panneaux de type sandwich recouverts dudit complexe membraneux.

Le cumul de matériaux ayant différentes masses et une grande résilience permet une dissipation rapide de l'énergie acoustique. Cet ensemble, formant un complexe anti-vibratile très efficace.

Le complexe membraneux selon l'invention, ne nécessite pas la mise en oeuvre d'accessoires (cornières, rivets et/ou mastic ou colle) pour le maintenir en place.

En outre le collage à l'interface membrane/panneau porteur est insensible aux variations de températures. Il n'y a pas de fluage, ni de retraits.

Les buts, caractéristiques et avantages ci-dessus, et d'autres encore, ressortiront mieux de la description qui suit et des dessins annexés, dans lesquels :
La figure 1 est une vue en perspective d'un premier mode de réalisation du complexe membraneux anti-vibratile selon l'invention.
La figure 2 est une vue en perspective d'un deuxième mode de réalisation du complexe membraneux.
La figure 3 est une vue en coupe et à plus grande échelle selon la ligne 3-3 de la figure 1.
La figure 4 est une vue en perspective d'un troisième mode de réalisation du complexe membraneux anti-vibratile selon l'invention.
La figure 5 est une vue en coupe et à plus grande échelle selon la ligne 5-5 de la figure 4.
La figure 6 est une vue en perspective d'un quatrième mode de réalisation du complexe membraneux anti-vibratile selon l'invention.
La figure 7 est une vue en coupe et à plus grande échelle selon la ligne 7-7 de la figure 6.
La figure 8 est une vue en perspective d'une variante de réalisation du mode d'exécution illustré à la figure 6.
La figure 9 est une vue en coupe et à plus grande échelle selon la ligne 9-9 de la figure 8.
La figure 10 est une vue en coupe illustrant l'application du complexe membraneux anti-vibratile au recouvrement d'un panneau de couverture de type sandwich.
La figure 11 est une vue en coupe illustrant une autre mode d'exécution de l'invention, dans lequel, le complexe membraneux anti-vibratile est appliqué sur un parement métallique extérieur flexible et souple.
La figure 12 est une vue en coupe représentant un autre mode d'exécution de l'invention dans lequel le parement intérieur est muni d'une membrane.

On se reporte auxdits dessins pour décrire, à titre d'exemples, intéressants mais non limitatifs, différents modes de réalisation du complexe membraneux selon l'invention.

Dans la description et dans les revendications, les termes "externe" et "extérieur" désignent la surface ou couche superficielle du complexe membraneux qui se trouve orientée vers l'extérieur et exposée aux intempéries.

Le complexe membraneux anti-vibratile selon l'invention est remarquable en ce qu'il comprend une membrane externe 1 constituée d'une mince couche ou feuille de chlorure de polyvinyle (PVC) armée et/ou précontrainte, ou de matériaux dotés de caractéristiques et performances équivalentes, disposée et fixée sur une couche sous-jacente d'isolation acoustique 2. Cette dernière peut être appelée, en des termes plus techniques, couche acoustique dissipative et/ou dispersive.

La membrane externe 1 est armée et/ou précontrainte, de sorte qu'elle est peu ou pratiquement pas sensible à la dilatation. Cette membrane externe 1 présente, avantageusement, une épaisseur comprise entre 0,2 et 5 mm ou plus, et de préférence, comprise entre 1 mm et 3 mm.

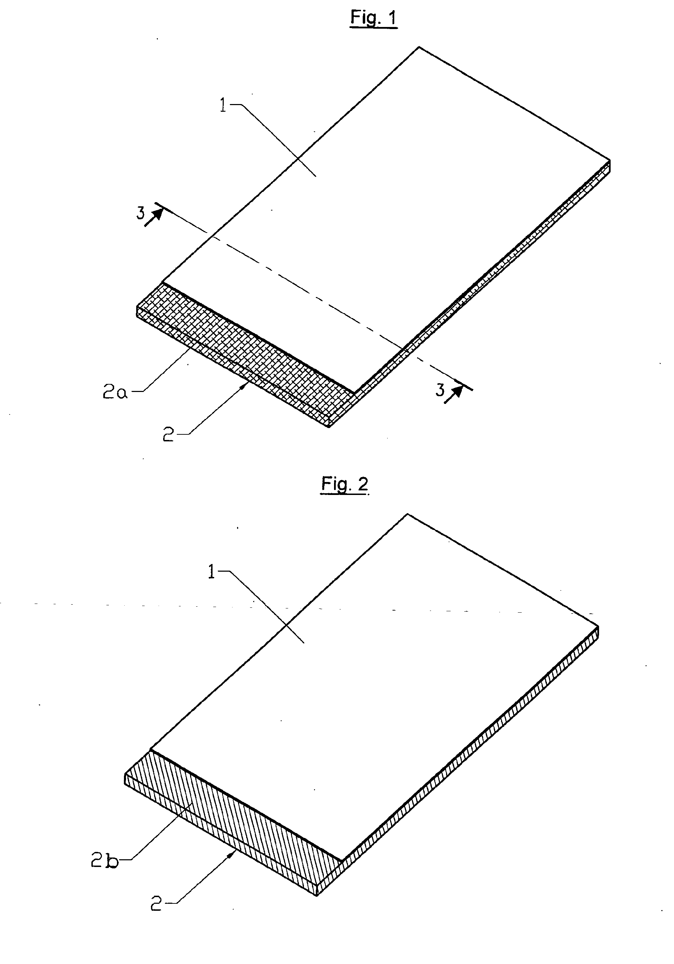

Selon le mode d'exécution illustré à la figure 1, la couche sous-jacente d'isolation acoustique 2 est constituée par un voile non tissé de polyester 2a adhésivé ou non.

Selon l'exemple de réalisation illustré à la figure 2, la couche sous-jacente d'isolation acoustique 2 est constituée par un monocouche homogène 2b de matière de synthèse, c'est-à-dire une mousse de PVC à cellules fermées ou non, ou une mousse de polyoléfine, ou une mousse de polyuréthane (PU) présentant une densité comprise entre 20 et 200 kg/m³. La mousse de polyoléfine peut être, par exemple une mousse de polyéthylène réticulé ou non (PE).

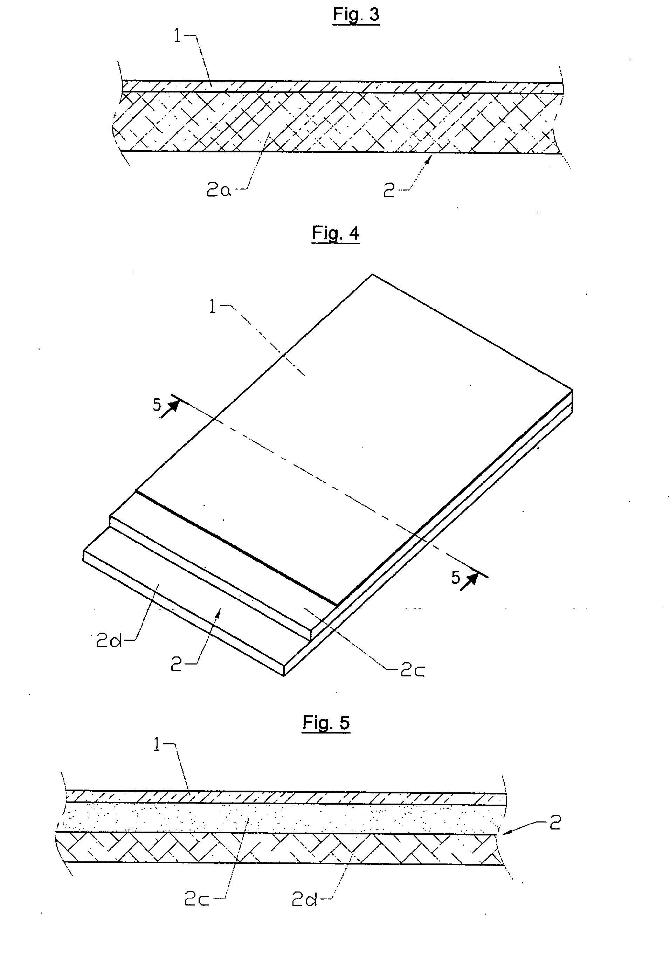

Selon le mode d'exécution représenté aux figures 4 et 5, la couche sous-jacente d'isolation acoustique 2 est constituée par un multicouche formé par la superposition d'une couche de mousse de PVC, ou de polyoléfine, ou de polyuréthane 2c et d'un voile non tissé de polyester adhésivé ou non 2d.

De préférence, la couche de mousse de PVC, ou de polyoléfine, ou de polyuréthane 2c et le voile non tissé de polyester adhésivé ou non 2d sont disposés, dans cet ordre, à partir de la membrane superficielle 1.

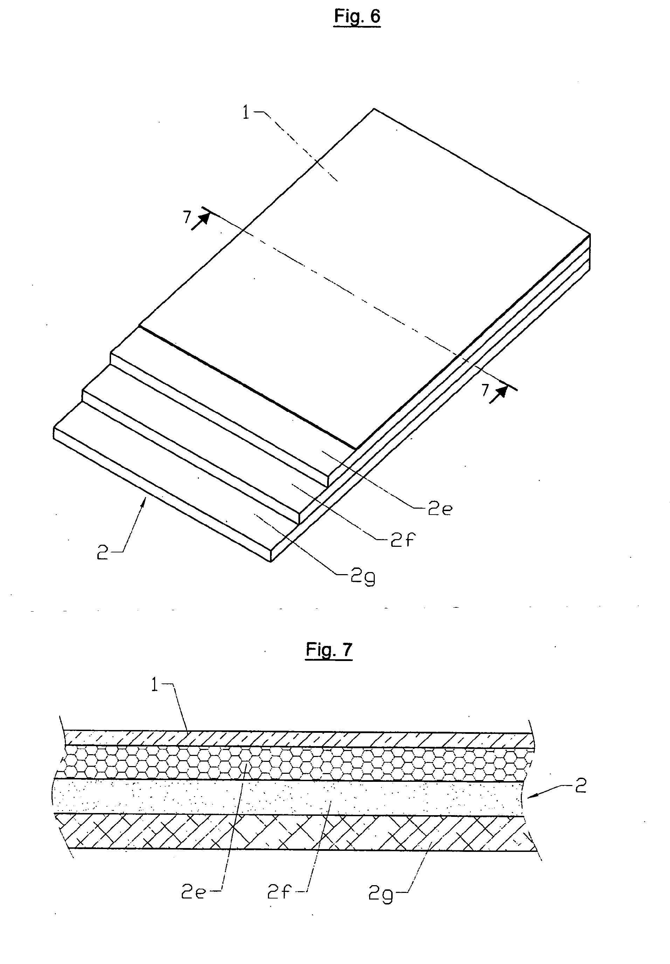

Selon le mode d'exécution montré aux figures 6 et 7, la couche sous-jacente d'isolation acoustique 2 est constituée par un multicouche formé par la superposition d'une masse lourde d'un élastomère de synthèse 2e tel que, par exemple de l'Éthylène-Propylène-Diène-Monomère (EPDM) présentant une densité comprise entre 600 et 900 kg/m³, du Styrene-Butadiene Rubber (SBR), ou d'un granulat de caoutchouc, ou de liège, ou tout autre matériau adéquat, une couche de mousse de PVC, ou de polyoléfine, ou de polyuréthane 2f et un voile non tissé de polyester adhésivé ou non 2g. De préférence, les couches superposées 2e, 2f, 2g, de matériaux ou substrats ci-dessus, sont disposées, dans cet ordre, sous la membrane superficielle 1.

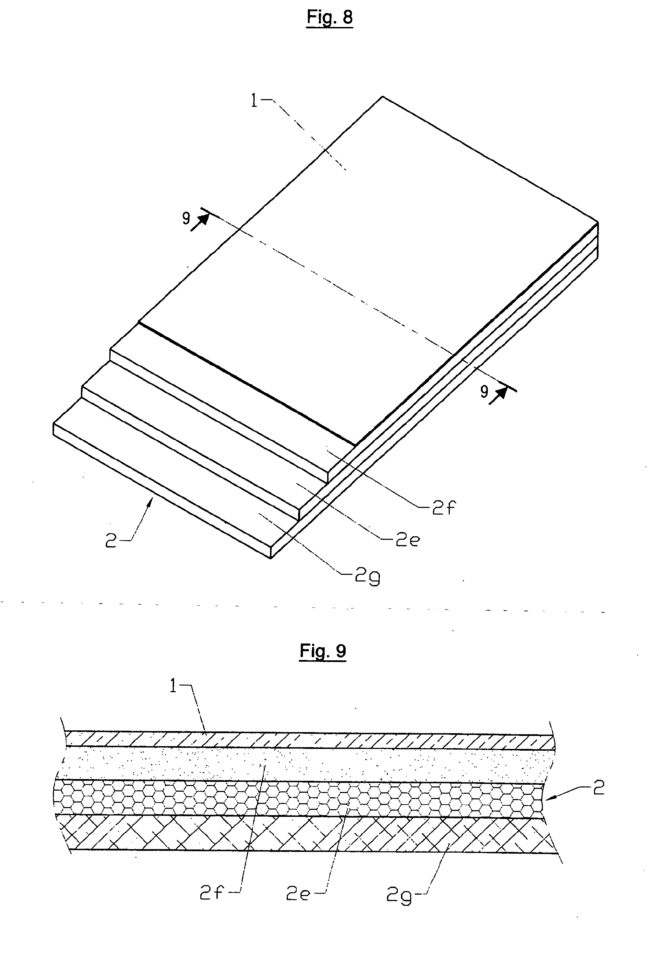

Le complexe membraneux anti-vibratile représenté aux figures 8 et 9, diffère de celui qui est illustré aux figures 6 et 7, par le fait que les différentes couches superposées constituant le complexe sous-jacent d'isolation acoustique, sont disposées dans un ordre différent. Selon ce dernier mode de réalisation, la couche de masse lourde d'élastomère de synthèse 2e (par exemple EPDM, ou granulat de caoutchouc, ou de liège) est disposée entre la couche de mousse PVC, ou de polyoléfine, ou de polyuréthane 2f et le voile non tissé de polyester adhésivé ou non 2g. Bien entendu, ces couches 2e, 2f, 2g peuvent être appliquées dans l'ordre souhaité.

Selon un mode de réalisation, les différents composants de la couche sous-jacente d'isolation acoustique 2 sont disposés dans l'ordre suivant à partir de la membrane superficielle 1 :
- le voile non tissé de polyester adhésivé ou non 2g ;
- les couches superposées d'élastomère de synthèse 2e telles que, par exemple Éthylène-Propylène-Diène-Monomère (EPDM), Styrene-Butadiene Rubber (SBR), granulat de caoutchouc, liège ;
- la mousse de PVC ou de polyoléfine ou de polyuréthane 2f.

Selon une variante d'exécution du mode de réalisation précédent, les différents composants de la couche sous-jacente d'isolation acoustique 2 sont disposés dans l'ordre suivant à partir de la membrane superficielle 1 :
- le voile non tissé de polyester adhésivé ou non 2g ;
- les couches superposées d'élastomère de synthèse 2e telles que, par exemple Éthylène-Propylène-Diène-Monomère (EPDM), Styrene-Butadiene Rubber (SBR), granulat de caoutchouc, liège.

Selon un autre mode de réalisation, les différents composants de la couche sous-jacente d'isolation acoustique 2 sont disposés dans l'ordre suivant à partir de la membrane superficielle 1 :
- le voile non tissé de polyester adhésivé ou non 2d ;
- la mousse de PVC ou de polyoléfine ou de polyuréthane 2f ;
- la masse lourde d'élastomère de synthèse 2e.

Selon une variante d'exécution du mode de réalisation précédent, les différents composants de la couche sous-jacente d'isolation acoustique 2 sont disposés dans l'ordre suivant à partir de la membrane superficielle 1 :
- le voile non tissé de polyester adhésivé ou non 2d ;
- la mousse de PVC ou de polyoléfine ou de polyuréthane 2f.

Les différentes couches constituant le complexe membraneux anti-vibratile de l'invention sont assemblées, entres-elles, par thermofusion ou au moyen de colles structurales ou autres adhésifs appropriés tels que, de manière avantageuse, des colles polyuréthane bi-composant ayant la particularité d'être stables après réticulation, ce qui garantit une tenue pérenne dans le temps eu égard aux :
- coefficient de dilatation élevé de ce type de matériau ;
- contraintes climatiques telles que gel/dégel, grêle, ... ;
- actions mécaniques des intervenants assurant la pose du complexe membraneux en toiture, ainsi que l'entretien des couvertures ;
- contraintes mécaniques dans le cas de pose sur chevrons avec la pression des profils d'étanchéité et de joints.

Le complexe membraneux anti-vibratile comportant les dispositions et caractéristiques ci-dessus peut présenter une épaisseur comprise entre 4 et 27 millimètres, voire plus, selon le nombre de couches superposées constituant le dit complexe membraneux.

Dans les différents modes d'exécution ci-dessus, la membrane 1 assure l'étanchéité à l'eau, la protection contre les UV, ainsi que la protection mécanique de la sous-couche d'isolation acoustique 2 et/ou phonique et/ou thermique ; elle participe, en outre à la stabilité dimensionnelle de l'ensemble du complexe membraneux. La résilience de ce complexe membraneux autorise sa fabrication en usine et sa mise à la disposition des entrepreneurs sous forme de rouleaux d'une largeur de l'ordre de 1,2 m et d'une longueur qui peut être comprise entre 8 et 20 mètres en fonction du nombre de couches superposées constituant le complexe membraneux et/ou de l'épaisseur de ce dernier.

Grâce à ses caractéristiques de souplesse, de résilience, de poids et d'épaisseur qui peuvent être très réduits, le complexe membraneux permet de dissiper l'énergie mécanique produite par les ondes sonores liées à des impacts ou à des bruits aériens, avant la mise en résonance avec des parements métalliques et/ou rigides des panneaux de couverture.

L'invention concerne également les panneaux de type sandwich constitués d'un parement extérieur 4 et d'un parement intérieur 5 disposés de part et d'autre d'une âme ou noyau 6 formé d'une ou de plusieurs couches de matériaux d'isolation thermique et/ou acoustique et/ou phonique destinés au recouvrement de couvertures de toitures, ces panneaux sont remarquables en ce qu'au moins leur parement extérieur 4 est recouvert d'un complexe membraneux anti-vibratile tel que décrit précédemment.

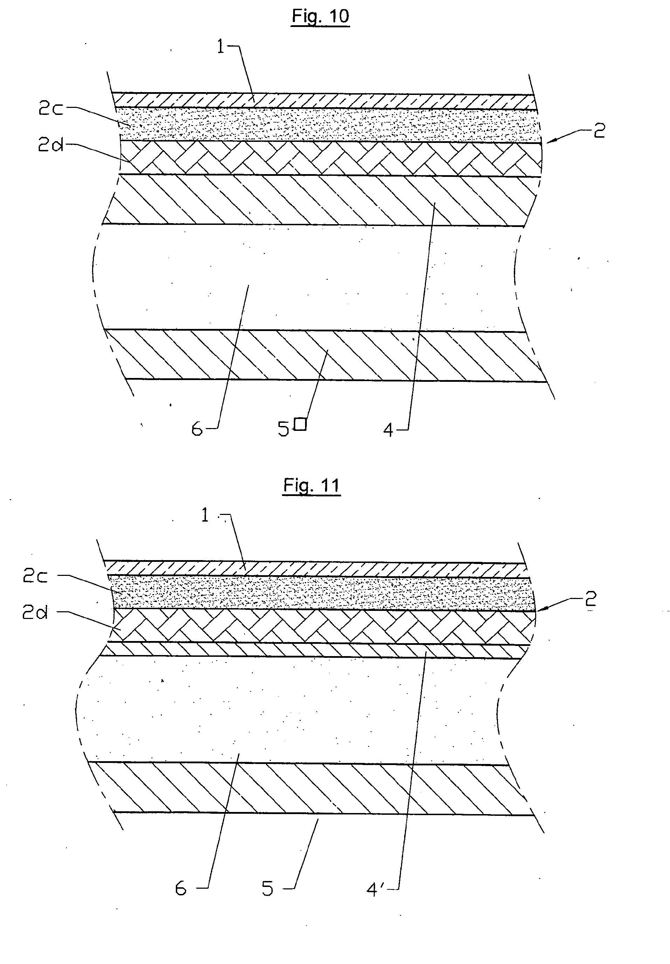

La figure 10 illustre une portion de couverture de toiture du genre, constituée par l'assemblage côte à côte de panneaux de type sandwich constitués de manière connue en soi, d'un parement métallique extérieur 4 et d'un parement métallique intérieur 5 généralement exécutés en aluminium et disposés de part et d'autre d'une âme ou noyau 6 formé d'une ou de plusieurs couche(s) de matériaux d'isolation thermique et/ou acoustique et/ou phonique. Ces parements extérieurs 4 et intérieurs 5 peuvent être exécutés en bois, par exemple le parement extérieur 4 et/ou le parement intérieur 5 peut (peuvent) être constitué(s) par des panneaux de particules de bois aggloméré tels que des panneaux du type CTB, CTBS, CTBH, MDF), ou en matière plastique (PVC), ou en matière thermoplastique (PP) ou en tout autre matériau adéquat.

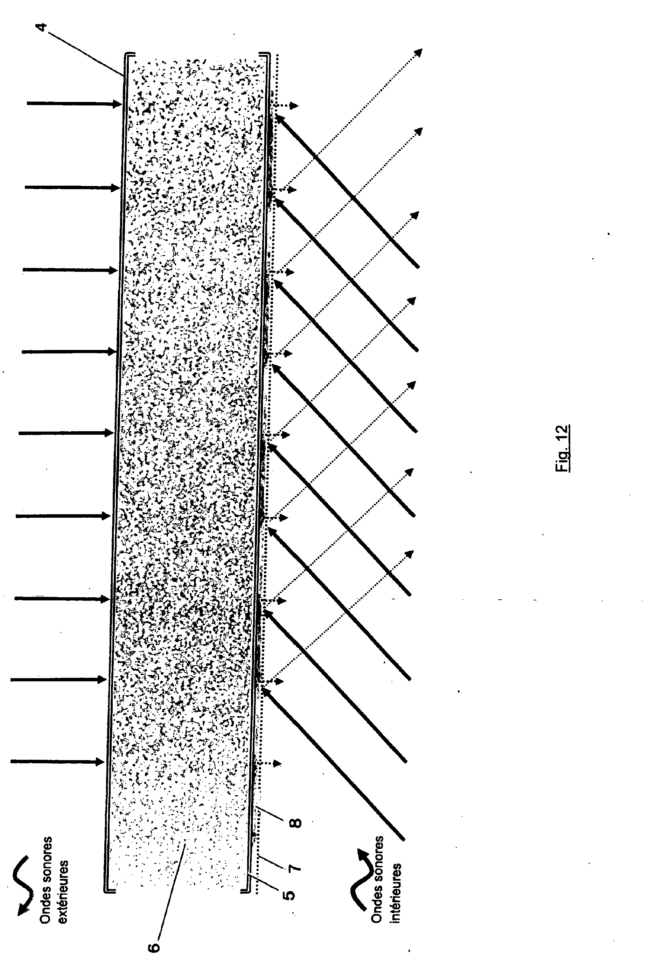

Selon un autre mode d'exécution très intéressant (figure 12), les panneaux de type sandwich comprennent une membrane PVC micro perforée 7 comprenant, en sous face, un voile non tissé de polyester adhésivé ou non 8 fixé contre le parement intérieur 5, au moyen d'une colle polyuréthane bi-composants.

Selon une variante de ce mode d'exécution (figure 12), les panneaux de type sandwich comprennent une membrane PVC micro perforée comprenant, en sous face, une mousse à cellule ouverte fixée contre le parement intérieur, au moyen d'une colle polyuréthane bi-composants.

Cet assemblage permet, en usine et sur de grands panneaux, d'assurer une parfaite cohésion sur les noyaux porteurs isolants et de garantir la tenue dans le temps de cet ensemble eu égard aux phénomènes de dilatation.

Sur un plan phonique, l'intérêt réside dans le fait que la membrane en partie intérieure des éléments de toiture permet d'éviter la réverbération et l'effet « caisse de tambour » qui génère une amplification des bruits dans la pièce du fait de sa conception avec de grandes surfaces lisses et donc ayant d'important effets de réverbération, tels que les vitrages, le carrelage, les panneaux sandwich de la toiture, ... Cet assemblage agit donc comme un piège à son du fait de la micro-perforation de son revêtement et de la présence, en sous face, d'une couche de matériau absorbant les sons et ne les réfléchissant pas.

Sur un plan acoustique, le phénomène de mise en résonance d'un panneau sandwich, particulièrement d'un panneau sandwich dont les parements sont métalliques, généré par la chute de pluie ou de grêle est limité. En effet, cet assemblage limite la propagation des ondes sonores à travers ledit panneau, améliorant ainsi les mauvais comportements acoustiques du métal, par exemple de l'aluminium, en particulier sur les fréquences les plus sensibles.

Sur un plan thermique, l'apport de cette membrane PVC micro perforée en partie intérieure des panneaux sandwich, notamment des panneaux sandwich dont les parements sont métalliques et présentant donc une forte conductivité thermique, permet d'améliorer la performance thermique du panneau. Cette caractéristique est particulièrement intéressante pour répondre aux réglementations qui imposent des coefficients de résistance thermique de plus en plus élevés.

Sur un plan esthétique, le dispositif selon l'invention offre un grand choix de finitions, de textures et de couleurs. Les différentes finitions permettent une personnalisation des pièces ainsi couvertes.

Ces membranes ont encore pour avantage d'être lessivable et de ne pas craindre les rayures, contrairement à la plupart des finitions, notamment celles en aluminium thermolaqué.

D'autre part, les phénomènes d'oxydation connus sur les panneaux sandwich à parements métalliques sont supprimés du fait de la composition des membranes fixées sur le parement intérieur (PVC et fibres).

Le produit ainsi obtenu est classé non inflammable selon la réglementation et est stable par rapport aux rayons UV.

Selon l'invention, les couvertures de ce genre sont recouvertes d'un complexe membraneux anti-vibratile comportant les dispositions caractéristiques précédemment décrites. Ce complexe membraneux anti-vibratile peut être fixé sur le parement extérieur 4 des panneaux, par thermo-collage ou au moyen de colles structurales appropriées.

Dans un autre mode d'exécution de l'invention illustré sur la figure 11, le parement métallique extérieur 4' est souple et flexible, et est destiné à être appliqué sur un noyau d'isolation thermique et/ou acoustique et/ou phonique 6. Dans ce cas le parement 4' est constitué par une feuille d'aluminium présentant une épaisseur de l'ordre 25 à 55 centièmes de millimètre.

Le noyau d'isolation thermique et/ou acoustique et/ou phonique 6 peut être constitué par une mince couche d'un matériau souple, flexible et résilient, du type polyéthylène réticulé (PE) ou polystyrène (PS) graphité élastifié, qui doit être suffisamment souple et flexible pour permettre les déformations du parement métallique extérieur 4' également souple et flexible; et une couche épaisse d'un matériau d'isolation acoustique et/ou thermique et/ou phonique qui peut être elle-même constituée de deux couches superposées. Ces deux couches superposées peuvent être des polymères du genre : une couche de polystyrène graphité et une couche de polystyrène expansé.

Suivant une variante (non représentée) du mode d'exécution précédent, la couche épaisse de matériau d'isolation acoustique et/ou thermique et/ou phonique est constituée de trois couches superposées dont la couche intermédiaire est munie de trous, ou d'un réseau de trous perpendiculaires au parement du panneau, dans lesquels sont logés des granules de masse lourde ou autres matériaux dotés de qualités d'isolation acoustique, par exemple des granules d'EPDM.

Cette couche intermédiaire alvéolée peut être de type polystyrène expansé, expansé graphité, extrudé, mousse de polyuréthane, mousse de PVC rigide, klégecel, ou tout autre matériau susceptible de pouvoir être perforé.

Les trous aménagés dans cette couche intermédiaire peuvent consister en une série de perforations en lignes et positionnées en quinconce, de manière à constituer un réseau uniforme et homogène.

Cette caractéristique particulière permet d'augmenter la légèreté des panneaux que cette couche compose, tout en augmentant la conductivité thermique d'un isolant classique.

L'intérêt de cette disposition est de participer en plus du complexe membraneux anti-vibratile à l'atténuation des bruits d'impacts. De part la souplesse des différentes couches, la dissipation des ondes sonores est plus rapide que sur un noyau rigide (augmentation de la mise en résonance). La souplesse, la flexibilité et la faible épaisseur du parement métallique extérieur 4' évite qu'il ne rentre également trop vite en résonance.

Par extension, le complexe membraneux peut être fixé sous le parement métallique intérieur 5, pour rendre la surface moins réverbérante. Aussi, il peut être appliqué, à la fois, sur le parement métallique extérieur 4, 4' et sous le parement métallique intérieur 5.

## Revendications

1. Complexe membraneux anti-vibratile, **caractérisé en ce qu'**il comprend une membrane externe (1) constituée d'une mince couche ou feuille de chlorure de polyvinyle (PVC) armée et/ou précontrainte disposée et fixée sur une couche sous-jacente d'isolation acoustique (2).

2. Complexe membraneux anti-vibratile selon la revendication 1, **caractérisé en ce que** la couche sous-jacente d'isolation acoustique (2) est constituée par un voile non tissé de polyester (2a).

3. Complexe membraneux anti-vibratile selon la revendication 1, **caractérisé en ce que** la couche sous-jacente d'isolation acoustique (2) est constituée par un monocouche (2b) de mousse de PVC, ou de mousse de polyoléfine, ou de mousse de polyuréthane (PU).

4. Complexe membraneux anti-vibratile selon la revendication 1, **caractérisé en ce que** la couche sous-jacente d'isolation acoustique (2) est constituée par un multicouche formé par la superposition d'une couche de mousse PVC, ou de polyoléfine, ou de polyuréthane (2c) et d'un voile non tissé de polyester adhésivé ou non (2d).

5. Complexe membraneux anti-vibratile selon la revendication 4, **caractérisé en ce que** les couches superposées de mousse de PVC, ou de polyoléfine, ou de polyuréthane (2c) et du voile non tissé de polyester adhésivé ou non (2d) sont disposées, dans cet ordre, à partir de la membrane superficielle (1).

6. Complexe membraneux anti-vibratile selon la revendication 1, **caractérisé en ce que** la couche sous-jacente d'isolation acoustique (2) est constituée par un multicouche formé par la superposition :
- d'une masse lourde d'un élastomère de synthèse (2e) tel que, par exemple de l'Éthylène-Propylène-Diène-Monomère (EPDM), du Styrene-Butadiene Rubber (SBR), ou d'un granulat de caoutchouc, ou de liège ;
- d'une couche de mousse de PVC ou de polyoléfine ou de polyuréthane (2f) ;
et,
- d'un voile non tissé de polyester adhésivé ou non (2g).

7. Complexe membraneux anti-vibratile selon la revendication 1, **caractérisé en ce que** le voile non tissé de polyester adhésivé ou non (2d, 2g) est disposé entre la membrane externe (1) et les autres couches de matériaux superposés de la couche sous-jacente d'isolation acoustique (2).

8. Complexe membraneux anti-vibratile selon la revendication 6, **caractérisé en ce que** les couches superposées d'élastomère de synthèse (2e) telles que, par exemple Éthylène-Propylène-Diène-Monomère (EPDM), Styrene-Butadiene Rubber (SBR), granulat de caoutchouc, liège ; la couche de mousse de PVC ou de polyoléfine ou de polyuréthane (2f) ; le voile non tissé de polyester adhésivé ou non (2g) sont disposés, dans cet ordre, à partir de la membrane superficielle (1).

9. Complexe membraneux anti-vibratile selon la revendication 6, **caractérisé en ce que** les différentes couches constituant le multicouche sous-jacent d'isolation acoustique (2) sont disposées, dans l'ordre ci-après, à partir de la membrane superficielle (1) : mousse PVC, ou de polyoléfine, ou de polyuréthane (2f) ; masse lourde d'élastomère de synthèse (2e) ; voile non tissé de polyester adhésivé ou non (2g).

10. Complexe membraneux anti-vibratile selon la revendication 6, **caractérisé en ce que** le voile non tissé de polyester adhésivé ou non (2g), les couches superposées d'élastomère de synthèse (2e) telles que, par exemple Éthylène-Propylène-Diène-Monomère (EPDM), Styrene-Butadiene Rubber (SBR), granulat de caoutchouc, liège, la mousse de PVC ou de polyoléfine ou de polyuréthane (2f), sont disposés, dans cet ordre, à partir de la membrane superficielle (1).

11. Complexe membraneux anti-vibratile selon la revendication 6, **caractérisé en ce que** le voile non tissé de polyester adhésivé ou non (2d) ; la mousse de PVC ou de polyoléfine ou de polyuréthane (2f) ; la masse lourde d'élastomère de synthèse (2e) ; sont disposés, dans cet ordre, à partir de la membrane superficielle (1).

12. Panneaux de type sandwich constitués d'un parement extérieur (4) et d'un parement intérieur (5) disposés de part et d'autre d'une âme ou noyau d'isolation (6) formé d'une ou de plusieurs couches de matériaux d'isolation thermique et/ou acoustique et/ou phonique destinés au recouvrement de couvertures de toitures, ces panneaux sont **caractérisés en ce qu'**au moins leur parement extérieur (4) est recouvert d'un complexe membraneux anti-vibratile selon l'une quelconque des revendications 1 à 11.

13. Panneaux de type sandwich selon la revendication 12, constitués d'un parement extérieur (4) et d'un parement intérieur (5) disposés de part et d'autre d'une âme ou noyau d'isolation (6) formé d'une ou de plusieurs couches de matériaux d'isolation thermique et/ou acoustique et/ou phonique destinés au recouvrement de couvertures de toitures, le parement extérieur (4) de ces panneaux étant recouvert d'un complexe membraneux anti-vibratile selon l'une quelconque des revendications 1 à 11, **caractérisé en ce qu'**ils comprennent une membrane PVC micro perforée (7) comprenant, en sous face, un voile non tissé de polyester adhésivé ou non (8) fixé contre le parement intérieur (5), au moyen d'une colle polyuréthane bi-composants.

14. Panneaux de type sandwich selon la revendication 12, constitués d'un parement extérieur (4) et d'un parement intérieur (5) disposés de part et d'autre d'une âme ou noyau d'isolation (6) formé d'une ou de plusieurs couches de matériaux d'isolation thermique et/ou acoustique et/ou phonique destinés au recouvrement de couvertures de toitures, le parement extérieur (4) de ces panneaux étant recouvert d'un complexe membraneux anti-vibratile selon l'une quelconque des revendications 1 à 11, **caractérisé en ce qu'**ils comprennent une membrane PVC micro perforée (7) comprenant, en sous face, une mousse à cellule ouverte (8) fixée contre le parement intérieur (5), au moyen d'une colle polyuréthane bi-composants.

15. Panneau de type sandwich selon la revendication 12, **caractérisé en ce que** le noyau d'isolation thermique et/ou acoustique et/ou phonique (6) comprend un multicouche constitué :
- d'une mince couche d'un matériau souple, flexible et résilient ; et,
- d'une couche épaisse d'un matériau d'isolation acoustique et/ou thermique et/ou phonique qui peut être constituée elle-même :
- de deux couches superposées ;
- ou de trois couches superposées dont la couche intermédiaire est munie de trous, ou d'un réseau de trous perpendiculaires au parement du panneau, dans lesquels sont logés des granules de masse lourde ou autres matériaux dotés de qualités d'isolation acoustique.

16. Couverture de bâtiment, en particulier couverture de vérandas ou d'extension de bâtiment, comprenant des panneaux de type sandwich comportant un parement métallique extérieur (4 ; 4') et un parement métalliques intérieur (5) disposés de part et d'autre d'une âme ou noyau formé d'une ou de plusieurs couche(s) de matériaux d'isolation thermique et/ou acoustique et/ou phonique (6), **caractérisée en ce que** ledit parement extérieur (4 ; 4') desdits panneaux est recouvert d'un complexe membraneux anti-vibratile selon l'une quelconques des revendications 1 à 11.

17. Couverture de bâtiment, en particulier couverture de vérandas ou d'extension de bâtiment, comprenant des panneaux de type sandwich comportant un parement extérieur (4 ; 4') et un parement intérieur (5) disposés de part et d'autre d'une âme ou noyau formé d'une ou de plusieurs couche(s) de matériaux d'isolation thermique et/ou acoustique et/ou phonique (6), lesdits parements extérieur (4) et intérieur (5) étant exécutés en bois, ou en particules de bois aggloméré, ou en matière plastique, ou en matière thermoplastique, **caractérisé en ce que** ledit parement extérieur (4 ; 4') desdits panneaux est recouvert d'un complexe membraneux anti-vibratile selon l'une quelconques des revendications 1 à 11.

18. Couverture de bâtiment selon la revendication 16, **caractérisée en ce que** le parement métallique extérieur (4 ; 4') est souple et flexible, et est appliqué sur un noyau d'isolation thermique et/ou acoustique et/ou phonique (6), ledit parement métallique extérieur (4 ; 4') étant constitué par une feuille d'aluminium présentant une épaisseur de l'ordre 25 à 55 centièmes de millimètre.
